# EUROPEAN PATENT APPLICATION

(11) **EP 2 495 803 A1**
(43) Date of publication of application: **05.09.2012**
(21) Application number: 10826572.9
(22) Date of filing: 20.10.2010
(51) Int. Cl.: H01M 12/08

(54) **LITHIUM-AIR BATTERY**

(30) Priority: 29.10.2009 JP 2009248755
(71) Applicant: Sony Corporation, Tokyo 108-0075 (JP)
(72) Inventor: UESAKA Shinichi, Tokyo 108-0075 (JP)
(74) Representative: Müller - Hoffmann & Partner
(86) International application number: PCT/JP2010/068430
(87) International publication number: WO 2011/052440

(57) **Abstract**

A lithium air battery capable of being used for a long time with little deterioration due to influence by moisture in the air in which oxygen supply to a porous cathode is not inhibited by an air electrode current collector is provided. The lithium air battery includes an oxygen permselective film 80 that is less likely to transmit moisture vapor and that selectively transmits oxygen, an oxygen chamber 88 that stores oxygen, an air electrode current collector 62 made of a porous material, a diffusion layer 50 that is arranged between the air electrode current collector and a porous cathode and is made of a conductive material, the porous cathode 10 containing a conductive material and a catalyst material, a separator 30 that is less likely to pass moisture vapor, a nonaqueous electrolyte 40, an anode 20 that extracts lithium ions, and an anode current collector 64. The lithium air battery may have a water-repellent layer.

## Description

### TECHNICAL FIELD

The present invention relates to a lithium air battery.

### BACKGROUND ART

To realize low carbon society, developing batteries having a significantly increased capacity is urgently needed.
In recent years, lithium air batteries and lithium air secondary batteries achieving a significantly increased capacity by taking in oxygen in the air have been actively developed. Examples of reports on the air batteries include the following.

In the after-mentioned Non-patent document 1 titled "Air Battery," the following description is given. FIG. 5(A) corresponds to FIG. 1 shown in Patent document 1, which illustrates a schematic view of an air battery.

The air battery according to the invention of Patent document 1 includes an anode, a cathode that has a catalyst which contains cerium and in which cubic capacity of fine pores being from 5 nm to 35 nm both inclusive in diameter is equal to or larger than 0. 15 ml/g, and a nonaqueous electrolyte existing between the cathode and the anode. In Patent document 1, a description is given that the air battery is allowed to have a larger discharge capacity, and is allowed to have a larger charge capacity.

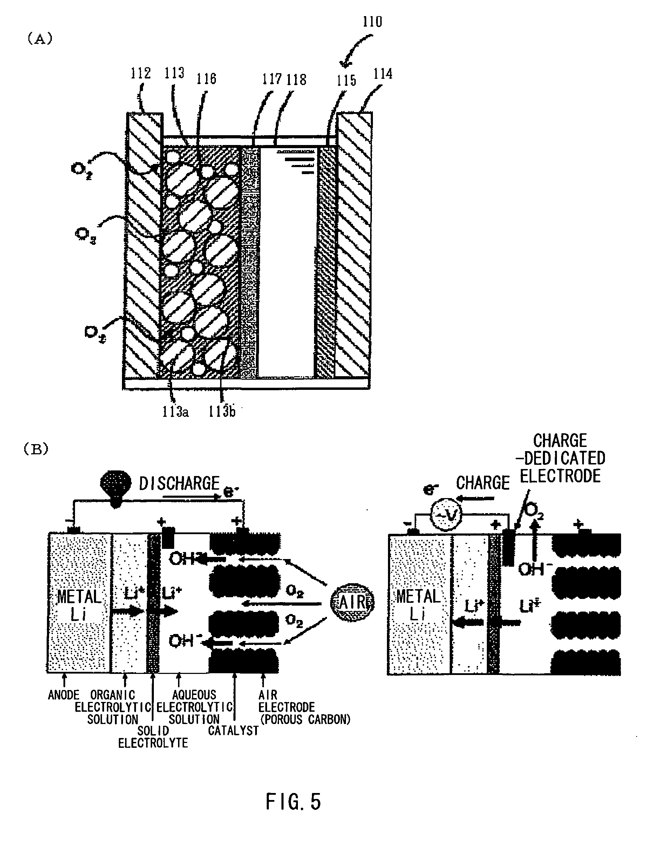

As illustrated in FIG. 5(A), an air battery 110 includes an electrolytic solution 118 between a cathode 113 formed on a current collector 112 and a lithium anode 115 adjacent to a current collector 114. The cathode 113 is provided with a separator 117 on the side closer to the electrolytic solution 118. The cathode 113 is fabricated by press-forming a catalyst 116 and an electrical conductor 113a with the use of a binder 113b. The foregoing description is given in Non-patent document 1.

In the after-mentioned Non-patent document 1 titled "Development of a New-type Lithium-Air Battery with Large Capacity," the following description is given. FIG. 5(B) corresponds to FIG. 2 shown in Non-patent document 1, which illustrates a configuration of a lithium air battery (left diagram: at the time of discharge, right diagram: at the time of charge).

In the case where a solid electrolyte transmitting only lithium ions is used as a dividing wall between an organic electrolytic solution closer to an anode and an aqueous electrolytic solution closer to an air electrode, both the electrolytic solutions are allowed to be prevented from being mixed, and battery reaction is allowed to be promoted. It has been found that precipitation of lithium oxide (LI₂O) as a solid reaction product in the cathode is allowed to be thus prevented. That is, in this battery, a discharge reaction product is not solid lithium oxide (LI₂O) but is lithium hydroxide (LiOH) that is easily soluble in the aqueous electrolytic solution, and clogging of carbon fine pores of the air electrode does not occur. Further, since water, nitrogen, or the like is not allowed to be transmitted through the solid electrolyte as the dividing wall, there is no risk of its reaction with metal lithium of the anode. Further, at the time of charge, by arranging a charge-dedicated cathode, corrosion and deterioration of the air electrode due to charge are allowed to be prevented.

A metal lithium ribbon as the anode and an organic electrolytic solution containing a lithium salt as the anode electrolytic solution are combined. As the dividing wall that separates the cathode from the anode, a lithium ion solid electrolyte is arranged in the center. As the cathode aqueous electrolytic solution, an alkali aqueous gel is used, which is combined with the cathode formed of a microfabricated carbon and an inexpensive oxide catalyst.

Reaction in the electrodes at the time of discharge is as follows. In the anode, the metal lithium is dissolved in the organic electrolytic solution as lithium ions (Li⁺) (reaction: Li→Li⁺+e⁻), and electrons are supplied to a conductive wire. The dissolved lithium ions (Li⁺) pass through the solid electrolyte and are moved to the cathode aqueous electrolytic solution. In the cathode, the electrons are supplied from the conductive wire, oxygen and water in the air react with each other on the surface of the microfabricated carbon, and hydroxide ions (OH⁻) are generated (reaction: O₂+2H₂O+4e⁻→4OH⁻). The hydroxide ions meet the lithium ions (Li⁺) in the cathode aqueous electrolytic solution, and accordingly aqueous lithium hydroxide (LiOH) is generated.

Reaction in the electrodes at the time of charge is as follows. In the anode, electrons are supplied from the conductive wire, and lithium ions (Li⁺) pass through the solid electrolyte from the cathode aqueous electrolytic solution to the anode surface, at which precipitation reaction of the metal lithium is initiated (reaction: Li⁺+e⁻→Li). In the cathode, oxygen generation reaction is initiated (reaction: 4OH⁻→O₂+2H₂O+4e⁻). Generated electrons are supplied to the conductive wire.

The new lithium air battery is allowed to be continuously used if the aqueous electrolytic solution of the cathode is changed and the metal lithium closer to the anode is changed by using a method such as a cassette instead of charging after discharge. This battery is a kind of fuel cell, and is allowed to be called "metal lithium fuel cell." If the lithium hydroxide (LiOH) generated in a region closer to the air electrode is collected from the used aqueous electrolytic solution, the metal lithium is allowed to be easily reproduced electrically and to be reused as a fuel. The foregoing description is given in Non-patent document 1.

Further, an air battery using an oxygen permselective film and a diffusion layer has been known (for example, see the after-mentioned Patent documents 2, 3, and 4).

For example, in the after-mentioned Patent document 2 titled "Cylindrical Air Cell and Electrode Manufacturing Method," the following description is given. FIG. 6(A) and FIG. 6(B) correspond to FIG. 1 shown in Patent document 2, which illustrates a half cross-sectional view of an AA air zinc battery using a cylindrical air electrode.

An enlarged view surrounded by a circle in FIG. 6(B) illustrates a four-layer structured cylindrical air electrode (X) according to Patent document 2. Referential symbol 201 represents a porous catalyst layer, referential symbol 202 represents a stainless steel wire plated with nickel (metal current collector layer), referential symbol 203 represents a gas diffusion layer, and referential symbol 204 represents an oxygen permselective film layer. Referential symbol 205 represents a sealant to prevent an electrolytic solution from intruding into a gap between the oxygen permselective film layer and the gas diffusion layer, referential symbol 206 represents a separator, and referential symbol 207 represents a gel zinc anode. The gel zinc anode is prepared as follows. Three wt% of sodium polyacrylate and 1 wt% of carboxymethyl cellulose are added to 40 wt% of potassium hydroxide aqueous solution (containing 3 wt% of ZnO) to obtain a gel electrolytic solution. Next, zinc alloy powder with doubled amount of the gel electrolytic at weight ratio is added to the gel electrolytic solution, and the resultant is mixed to obtain a gel zinc anode. Referential symbol 208 represents an air diffusion paper, referential symbol 209 represents a cathode can, and referential symbol 210 represents an insulating tube. Referential symbol 211 represents an air inlet hole, referential symbol 212 represents a seal to be exfoliated before using the battery, referential symbol 213 represents a cathode cap, and referential symbol 214 represents plate paper. Referential symbols 215 and 216 represent metal caps. The cylindrical air electrode is sandwiched between the referential symbols 215 and 216, the resultant is pressurized and is spot-welded to the cathode can, and thereby current is collected. Referential symbol 217 represents an organic sealant, referential symbol 218 represents a resin seal, referential symbol 219 represents an anode terminal cap, and referential symbol 220 represents an anode current collector.

### PRIOR ART DOCUMENTS

### PATENT DOCUMENTS

Patent document 1: Japanese Unexamined Patent Application Publication No. 2008-270166 (paragraphs 006 to 0007, paragraph 0018, and FIG. 1)
Patent document 2: Japanese Unexamined Patent Application Publication No. 5-144482 (paragraph 0009 and FIG. 1)
Patent document 3: Japanese Unexamined Patent Application Publication No. 2004-319464 (FIG. 1, FIG. 2, FIG. 3, and paragraphs 0025 to 0028)
Patent document 4: Japanese Unexamined Patent Application Publication No. 2006-142275 (paragraphs 0109 to 0110, FIG. 2A, and FIG. 2B)

### NON-PATENT DOCUMENTS

Non-patent document 1: National Institute of Advance Industrial Science and Technology (AIST), "Development of New-type Lithium-Air Battery with Large Capacity" reported on February 24, 2009 on the website, and searched on August 17, 2009. Site address: http://www.aist.go.jp/aist j/pressrelease/pr2009/pr20090224/ pr20090224.html

### SUMMARY OF THE INVENTION

To achieve practical use of the lithium air secondary battery, it is necessary to take in oxygen in the air effectively and promote reaction.

According to Patent document 1, the description is given that the invention thereof achieves a higher discharge capacity and a higher charge capacity. However, in general lithium air batteries and general lithium air secondary batteries, a nonaqueous electrolyte is used. Therefore, in the case where moisture in the air is mixed in the nonaqueous electrolyte, the batteries may be deteriorated.

In Non-patent document 1, the aqueous electrolytic solution is used in a region closer to the cathode to take in the air, the nonaqueous electrolytic solution is used in a region closer to the anode, and both the electrolytes are separated by the solid electrolyte film. Therefore, even if moisture in the air is mixed in the cathode, since the anode is separated by the solid electrolyte, the moisture is not mixed in the nonaqueous electrolytic solution, and deterioration of the battery is allowed to be prevented. However, in Non-patent document 1, the alkali aqueous electrolytic solution is used. Therefore, carbon dioxide in the air and the aqueous electrolytic solution react with each other, and performance of the aqueous electrolytic solution is lowered. As a result, there is a disadvantage that performance of the battery is deteriorated.

In the existing lithium air batteries and the existing lithium air secondary batteries, there is a disadvantage that being influenced by moisture and carbon dioxide in the air, the performance is significantly deteriorated and long-term usage thereof is not available.

Patent document 2 discloses an air battery in which an oxygen permselective film, a gas diffusion layer, a metal current collector layer, and a porous catalyst layer are sequentially arranged from the direction in which air is taken into the battery. However, in this air battery, oxygen supply is inhibited by the metal current collector layer over the whole area of the porous catalyst layer, and therefore oxygen is not supplied over the whole area of the porous catalyst layer.

The present invention is made to solve the foregoing problems, and it is an object of the present invention to provide a lithium air battery capable of being used for a long time with little deterioration due to influence by moisture and carbon dioxide in the air in which oxygen supply to a porous cathode is not inhibited by an air electrode current collector.

That is, the lithium air battery according to the present invention has an anode extracting a lithium ion (for example, an anode (metal lithium) 20 in the after-mentioned embodiment), an air electrode current collector being made of a porous material (for example, an air electrode current collector 62 in the after-mentioned embodiment), a porous cathode containing a conductive material (for example, a porous cathode 10 in the after-mentioned embodiment), a diffusion layer being arranged between the air electrode current collector and the porous cathode and being made of a conductive material (for example, a diffusion layer 50 in the after-mentioned embodiment), and a nonaqueous electrolyte being arranged between the anode and the porous cathode (for example, a nonaqueous electrolyte 40 in the after-mentioned embodiment).

According to the present invention, the anode that extracts lithium ions, the air electrode current collector made of the porous material, the porous cathode containing the conductive material, the diffusion layer that is arranged between the air electrode current collector and the porous cathode and is made of the conductive material, and the nonaqueous electrolyte arranged between the anode and the porous cathode are included. Therefore, oxygen that has passed through the air electrode current collector made of the porous material is diffused by the diffusion layer, and accordingly oxygen is supplied to the entire surface of the porous cathode without inhibiting oxygen supply to the porous cathode by the air electrode current collector. In addition, as a result of reaction between oxygen and lithium in the entire porous cathode, battery output is improved. Further, since the nonaqueous electrolyte is used without using an alkali solution electrolyte, a lithium air battery with a little deterioration due to influence by moisture and carbon dioxide in the air is allowed to be provided. Further, by using a hydrophobic nonaqueous electrolyte, oxygen and moisture are less likely to be dissolved in the nonaqueous electrolyte, movement of oxygen and the moisture taken in from a region closer to the air electrode to the anode thorough the nonaqueous electrolyte is allowed to be suppressed, and anode deterioration caused by oxidation reaction and hydrolysis reaction is allowed to be suppressed. Therefore, lowering of charge and discharge characteristics of the air battery resulting from anode deterioration due to oxygen and moisture is allowed to be suppressed. Accordingly, a lithium air battery with further little deterioration due to influence by oxygen and moisture in the air is allowed to be provided.

### BRIEF DESCRIPTION OF THE DRAWINGS

[FIG. 1] FIG. 1 is a cross-sectional view illustrating a schematic structure of a lithium air battery in an embodiment of the present invention.
[FIG. 2] FIG. 2 is a cross-sectional view illustrating a schematic structure of a lithium air battery in the embodiment of the present invention.
[FIG. 3] FIG. 3 is a cross-sectional view illustrating a schematic structure of a lithium air battery in the embodiment of the present invention.
[FIG. 4] FIG. 4 is a cross-sectional view illustrating a schematic structure of a lithium air battery in the embodiment of the present invention.
[FIG. 5] FIG. 5 is a diagram illustrating an air battery in an existing technology.

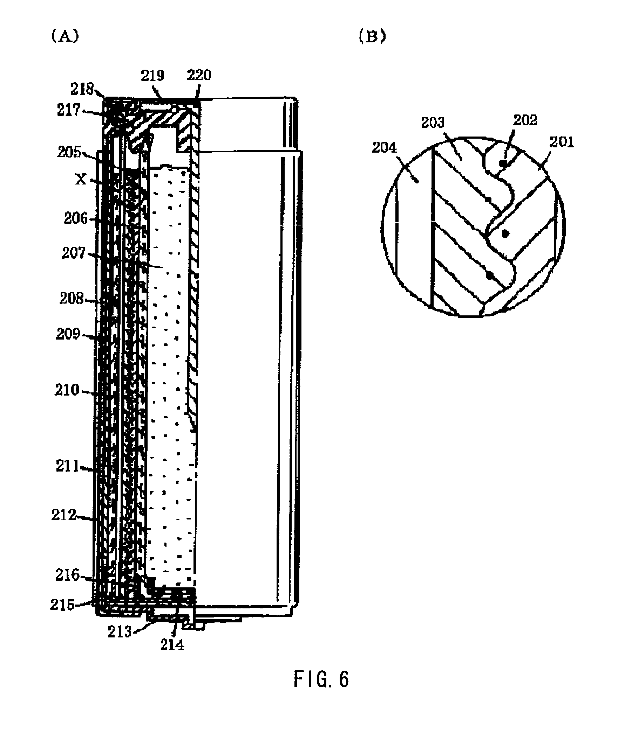

[FIG. 6] FIG. 6 is a diagram illustrating an air battery in an existing technology.

### BEST MODE(S) FOR CARRYING OUT THE INVENTION

A lithium air battery according to the present invention preferably has an oxygen permselective film And allows oxygen transmitted through the oxygen permselective film to be taken into the porous cathode through the air electrode current collector and the diffusion layer. According to such a configuration, transmission of moisture vapor is suppressed by the oxygen permselective film and oxygen is supplied to the porous cathode through the air electrode current collector and the diffusion layer. Therefore, a lithium air battery with little deterioration due to influence by moisture in the air is allowed to be provided.

Further, the lithium air battery according to the present invention preferably has a gap between the oxygen permselective film and the air electrode current collector. According to such a configuration, the gap becomes a space that stores oxygen. Therefore, transmission of moisture vapor is suppressed, and oxygen is continuously supplied to the porous cathode through the air electrode current collector and the diffusion layer. Accordingly, a lithium air battery with little deterioration due to influence by moisture in the air is allowed to be provided.

Further, the lithium air battery according to the present invention preferably has a water-repellent layer made of a porous material and allows air that has passed through the water-repellent layer to be taken into the oxygen permselective film. According to such a configuration, intrusion of moisture vapor into the oxygen permselective film is allowed to be suppressed by the water-repellent layer. Therefore, a lithium air battery with little deterioration due to influence by moisture in the air is allowed to be provided.

Further, the lithium air battery according to the present invention preferably has a gap between the water-repellent layer and the oxygen permselective film. According to such a configuration, moisture vapor is allowed to be retained in a space of the gap between the water-repellent layer and the oxygen permselective film. Therefore, a lithium air battery with little deterioration due to influence by moisture in the air is allowed to be provided.

Further, the lithium air battery according to the present invention preferably has a water-repellent layer that is arranged between the oxygen permselective film and the air electrode current collector and is made of a porous material. According to such a configuration, intrusion of moisture vapor that has passed through the oxygen permselective film into the air electrode current collector is allowed to be suppressed. Therefore, a lithium air battery with little deterioration due to influence by moisture in the air is allowed to be provided.

Further, the lithium air battery according to the present invention preferably has a gap between the water-repellent layer and the oxygen permselective film and/or between the water-repellent layer and the air electrode current collector. According to such a configuration, moisture vapor is allowed to be retained in a space of the gap between the water-repellent layer and the oxygen permselective film and/or between the water-repellent layer and the air electrode current collector. Therefore, a lithium air battery with little deterioration due to influence by moisture in the air is allowed to be provided.

Further, the lithium air battery according to the present invention preferably has a first water-repellent layer made of a porous material and a second water-repellent layer that is arranged between the oxygen permselective film and the air electrode current collector and is made of a porous material. Air that has passed through the first water-repellent layer is preferably taken into the oxygen permselective film. According to such a configuration, moisture vapor is allowed to be inhibited from intruding in the air electrode current collector by the first water-repellent layer and the second water-repellent layer. Therefore, a lithium air battery with little deterioration due to influence by moisture in the air is allowed to be provided.

Further, the lithium air battery according to the present invention preferably has a gap between the first water-repellent layer and the oxygen permselective film, and preferably has a gap between the second water-repellent layer and the oxygen permselective film and/or between the second water-repellent layer and the air electrode current collector. According to such a configuration, moisture vapor is allowed to be retained in a space of the gap between the second water-repellent layer and the oxygen permselective film and/or between the second water-repellent layer and the air electrode current collector, in addition to in the gap between the first water-repellent layer and the oxygen permselective film. Therefore, a lithium air battery with little deterioration due to influence by moisture in the air is allowed to be provided.

Further, the lithium air battery according to the present invention preferably has a separator between the porous cathode and the nonaqueous electrolyte. According to such a configuration, the porous cathode is separated from the nonaqueous electrolyte by the separator that is less likely to pass moisture vapor. Therefore, a lithium air battery with little deterioration due to influence by moisture in the air is allowed to be provided.

It is to be noted that the lithium air battery according to the present invention is allowed to have the following configurations.
(1) The nonaqueous electrolyte is a liquid electrolyte containing a hydrophobic ionic liquid.
(2) In (1), the nonaqueous electrolyte contains a lithium salt and is a liquid electrolyte.
(3) In (1) or (2), the nonaqueous electrolyte contains an aprotic organic solvent and is a liquid electrolyte.
(4) The nonaqueous electrolyte in any one of (1) to (3) contains a polymer, and is a gel electrolyte or a solid electrolyte.
(5) The nonaqueous electrolyte is a liquid electrolyte containing a lithium salt and an aprotic organic solvent.
(6) In (5), the nonaqueous electrolyte contains a polymer and is a gel electrolyte.
(7) The nonaqueous electrolyte contains a lithium salt and a polymer, and is a solid electrolyte.
(8) The anode contains a Li alloy.
(9) In (14), the Li alloy contains Al, Zn, Pb, Si, Sn, Mg, In, Ca, Sb, Bi, or Cd.

A description will be given in detail below of an embodiment of the present invention with reference to the drawings.

### [Embodiment]

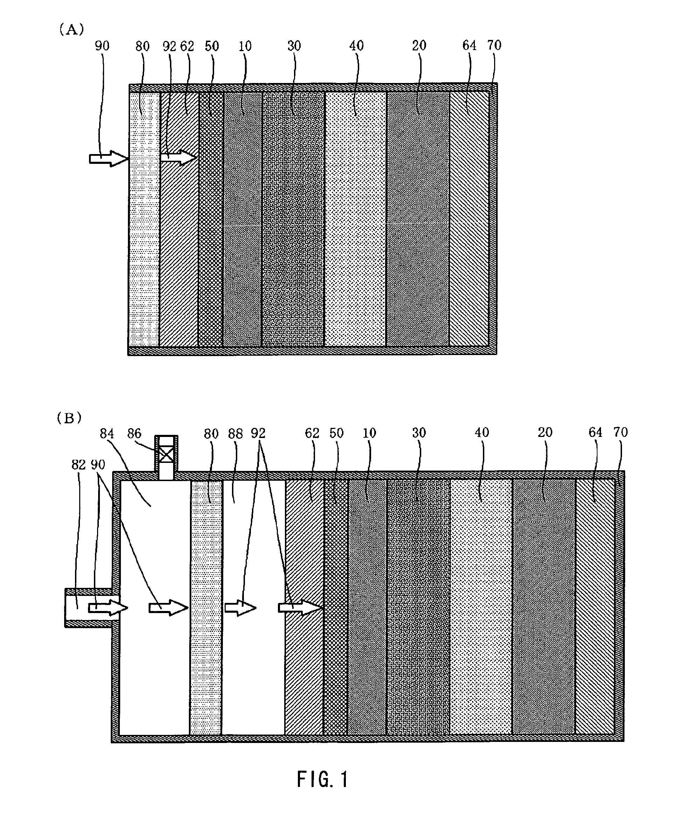

FIG. 1 illustrates a schematic structure of a lithium air battery according to an embodiment of the present invention.

The lithium air battery illustrated in FIG. 1(A) includes an oxygen permselective film 80 that is less likely to transmit moisture vapor and selectively transmits oxygen, an air electrode current collector 62 made of a conductive porous material, a porous diffusion layer 50 that is arranged between the air electrode current collector 62 and a porous cathode 10 and is made of a conductive material, the porous cathode 10 containing a conductive material and a catalyst material, a separator 30 that is less likely to transmit moisture vapor, a nonaqueous electrolyte 40, an anode 20 that extracts lithium ions, an anode current collector 64, and an outer package 70 in which these respective layers (films) are contained. To prevent deterioration of the anode 20 due to oxygen and moisture taken in from the region closer to the air electrode side, the nonaqueous electrolyte 40 is preferably hydrophobic. The anode 20 is, for example, metal lithium. The foregoing respective layers (films) are layered and are arranged being in close contact with the internal surface of the outer package 70.

Oxygen 92 in the air (atmosphere) 90 is selectively transmitted through the oxygen permselective film 80, passes through the air electrode current collector 62 made of the conductive material, is diffused by the diffusion layer 50, and is supplied to the porous cathode 10. Progression of the oxygen transmitted through the oxygen permselective film 80 is partly blocked by the air electrode current collector 62. However, oxygen that has passed through the air electrode current collector 62 is diffused by the diffusion layer 50 and is spread, and accordingly is effectively supplied to the entire porous cathode 10. Therefore, oxygen supply to the entire surface of the porous cathode 10 is not blocked by the air electrode current collector 62.

As described above, transmission of moisture vapor is suppressed by the oxygen permselective film 80. Therefore, deterioration due to influence by moisture in the air is little, and oxygen is effectively supplied to the entire porous cathode 10. Therefore, its battery output is allowed to be increased, and stable and long time usage thereof is achievable.

### [Diffusion Layer]

In the diffusion layer 50, oxygen flows through its fine pores. The diffusion layer 50 has a function to improve oxygen diffusion so that oxygen is in contact with the whole area of the air electrode (cathode). As the diffusion layer 50, a porous layer made of a conductive material is used. Specifically, for example, the diffusion layer 50 may be formed of a carbon paper, a carbon cloth, or a carbon felt that include carbon fibers, a sponge-like (foam) metal, or a metal fiber mat in which metal fibers are in a state of mattress.

As the diffusion layer 50, carbon fibers that have high resistance to corrosion and high conductivity are preferably used. A structure in which the carbon fibers are layered in the horizontal direction with respect to the diffusion layer surface is used. By layering the carbon fibers in the horizontal direction, diffusion characteristics with respect to the diffusion layer surface direction are improved, and oxygen is easily supplied to the porous cathode front surface. Meanwhile, since the diffusion layer becomes an electric resistance, the diffusion layer is desirably thin as much as possible.

The lithium air battery illustrated in FIG. 1(B) has a configuration further including a gap between the oxygen permselective film 80 and the air electrode current collector 62 as an oxygen chamber 88 to store oxygen and an air chamber 84 provided with an air inlet 82 and a pressure relief valve 86 in addition to the components of the lithium air battery illustrated in FIG. 1(A).

In FIG. 1(B), air 90 sent to the air inlet 82 through a dust removal filter (not illustrated) and a moisture absorption filter (not illustrated) by a blower pump (not illustrated) is introduced to the air chamber 84. Further, in FIG. 1(B), the air 90 sent to the air inlet 82 through the dust removal filter, the moisture absorption filter, and a carbon dioxide absorption filter (not illustrated) by the blower pump may be introduced to the air chamber 84. Pressure in the air chamber 84 is kept constant by the pressure relief valve 86 (setting is previously made so that the pressure relief valve 86 is opened at pressure equal to or larger than the set pressure, and is closed at pressure equal to or smaller than the set pressure).

Oxygen transmitted through the oxygen permselective film 80 is stored in the air chamber 84. Constant pressure air is retained in the air chamber 84, and oxygen is continuously and stably supplied to the porous cathode through the air electrode current collector and the diffusion layer. As a result, deterioration due to influence by moisture in the air is little, and high battery output is allowed to be obtained for a long time.

The moisture absorption filter removes moisture from air by using, for example, a drying agent such as diphosphorus pentoxide, dehydrite, activated alumina, anhydrous calcium sulfate, silica gel, magnesium oxide, and anhydrous calcium chloride.

Further, the carbon dioxide absorption filter removes carbon dioxide from air by using, for example, a carbon dioxide absorption agent such as LiOH, Mg(OH)₂, Ca(OH)₂, Ba(OH)₂, Sr(OH)₂, Li₂ZrO₃, Li₂SiO₃, Li₄SiO₄, MgO, activated carbon, and zeolite.

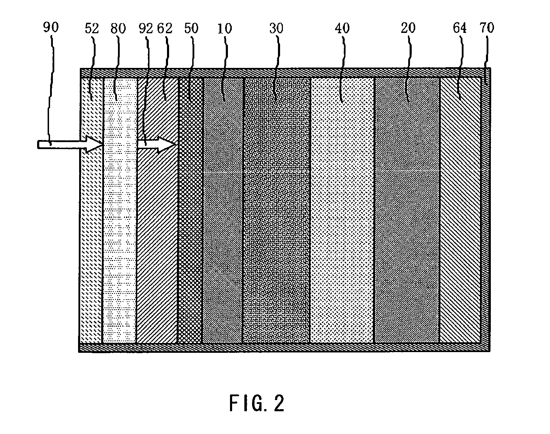

FIG. 2 is a cross-sectional view explaining a schematic structure of a lithium air battery in the embodiment of the present invention.

The lithium air battery illustrated in FIG. 2 has a configuration further including a water-repellent layer 52 made of a porous material in addition to the components of the lithium air battery illustrated in FIG. 1(A). Air that has passed through the water-repellent layer 52 is taken into the oxygen permselective film 80, and intrusion of moisture vapor into the oxygen permselective film 80 is suppressed by the water-repellent layer 52. Further, a gap may be provided between the water-repellent layer 52 and the oxygen permselective film 80 to allow moisture vapor to be retained in a space of the gap.

It is needless to say that the foregoing configuration is allowed to be adopted to the lithium air battery illustrated in FIG. 1(B).

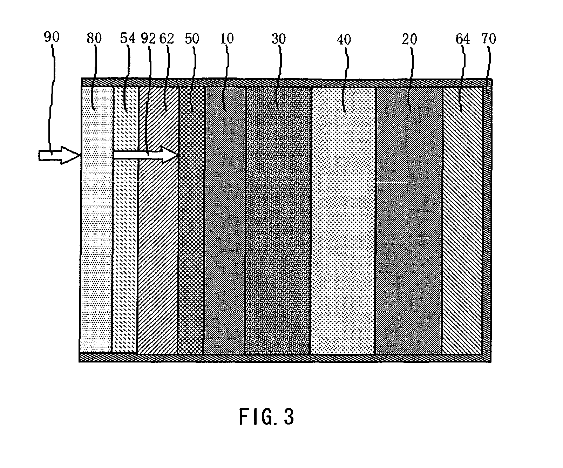

FIG. 3 is a cross-sectional view explaining a schematic structure of a lithium air battery in the embodiment of the present invention.

The lithium air battery illustrated in FIG. 3 has a configuration further including a water-repellent layer 54 made of a porous material between the oxygen permselective film 80 and the air electrode current collector 62 in addition to the components of the lithium air battery illustrated in FIG. 1(A). Intrusion of moisture vapor that has passed through the oxygen permselective film 80 into the air electrode current collector 62 is suppressed by the water-repellent layer 54. Further, a gap may be provided between the water-repellent layer 54 and the oxygen permselective film 80 and/or between the water-repellent layer 54 and the air electrode current collector 62 to allow moisture vapor to be retained in a space of the gap between the water-repellent layer 54 and the oxygen permselective film 80 and/or between the water-repellent layer 54 and the air electrode current collector 62.

It is needless to say that the foregoing configuration is allowed to be adopted to the lithium air battery illustrated in FIG. 1(B).

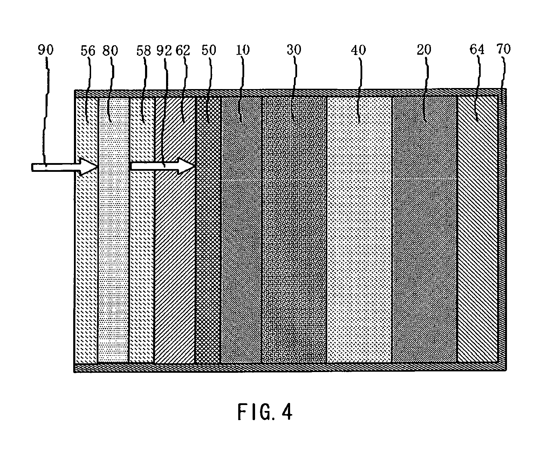

FIG. 4 is a cross-sectional view explaining a schematic structure of a lithium air battery in the embodiment of the present invention.

The lithium air battery illustrated in FIG. 4 has a configuration further including a first water-repellent layer 56 and a second water-repellent layer 58 that is arranged between the oxygen permselective film 80 and the air electrode current collector 62 and is made of a porous material in addition to the components of the lithium air battery illustrated in FIG. 1(A). Air that has passed through the first water-repellent layer 56 is taken into the oxygen permselective film 80. The intrusion of moisture vapor into the air electrode current collector 62 is suppressed by the first water-repellent layer 56 and the second water-repellent layer 58. Further, in addition to a gap between the first water-repellent layer 56 and the oxygen permselective film 80, a gap may be provided between the second water-repellent layer 58 and the oxygen permselective film 08 and /or the second water-repellent layer 58 and the air electrode current collector 62; and in addition to the gap between the first water-repellent layer 56 and the oxygen permselective film 80, moisture vapor may be retained in the gap between the second water-repellent layer 58 and the oxygen permselective film 80 and/or the second water-repellent layer 58 and the air electrode current collector 62.

It is needless to say that the foregoing configuration is allowed to be adopted to the lithium air battery illustrated in FIG. 1(B).

According to the configurations of the lithium air batteries illustrated in FIG. 1 to FIG. 4 described above, deterioration due to influence by moisture in the air is little, and high battery output is allowed to be obtained for a long time.

Next, a description will be given of respective layers (films) except for the diffusion layer 50, that is, the oxygen permselective film 80, the water-repellent layers 52 and 54, the first water-repellent layer 56, the second water-repellent layer 58, the air electrode current collector 62, the porous cathode 10, the separator 30, the anode 20, the anode current collector 64, and the nonaqueous electrolyte 40.

### [Oxygen Permselective Film]

As the oxygen permselective film 80, a water-repellent porous film that transmits oxygen and preferably suppresses moisture transmission is used. For example, a porous film formed of polytrimethylsilylpropyne ([C(CH₃)=C(Si(CH₃)₃)]ₙ), a silicone resin, polypropylene, polymethylpentene, polyisoprene, polybutadiene, polytetrafluoroethylene, chloroprene, polystyrene, polyethylene, polycarbonate, a silicon polycarbonate copolymer, polyphenylene sulfide, polyphenylene oxide, polyphenylene sulfide, polyester, or the like may be used.

### [Water-repellent Layer]

As the water-repellent layers 52 and 54, the first water-repellent layer 56, and the second water-repellent layer 58, a fluorine resin porous film having water repellancy is used. Examples of the fluorine resin include polytetrafluoroethylene (PTFE), polyvinylidene fluoride (PVDF), a tetrafluoroethylene-hexafluoroethylene copolymer, a tetrafluoroethylene-hexafluoropropylene copolymer (FEP), a tetrafluoroethylene-perfluoroalkylvinylether copolymer (PFA), a vinylidene fluoride-hexafluoropropylene copolymer, a vinylidene fluoride-chlorotrifluoroethylene copolymer, an ethylene-tetrafluoroethylene copolymer (ETFE resin), a polychlorotrifluoroethylene (PCTFE), a vinylidene fluoride-pentafluoropropylene copolymer, a propylene-tetrafluoroethylene copolymer, an ethylene-chlorotrifluoroethylene copolymer (ECTFE), and a vinylidene fluoride-hexafluoropropylene-tetrafluoroethylene copolymer.

### [Air Electrode Current Collector]

As the air electrode current collector 62, to improve oxygen diffusion, a porous body such as a mesh (grid)-like metal, a sponge-like (foam) metal, a punched metal, and an expanded metal is used. Examples of metals include stainless steel, nickel, aluminum, iron, titanium, and copper.

### [Air Electrode (Cathode)]

As a cathode active material, oxygen is used. The porous cathode 10 (air electrode) contains a conductive material having gaps through which oxygen and lithium ions are movable, and may contain a binder. Further, the porous cathode 10 may contain a catalyst to promote oxygen redox reaction. In the case of a primary battery, the porous cathode 10 may contain a lithium peroxide or a lithium oxide. In the case of a secondary battery, the porous cathode 10 does not contain the lithium peroxide or the lithium oxide.

### (Conductive Material)

For example, a carbon material, conductive fibers such as metal fibers, metal powder of metal such as copper, silver, nickel, and aluminum, and an organic conducive material such as a polyphenylene derivative may be used. As the carbon material, carbon black, graphite, activated carbon, carbon nanotube, and carbon fibers, and the like can be used. Further, mesoporous carbon obtained by burning a synthetic resin containing an aromatic ring, petroleum pitch, or the like can be used.

### (Binder)

A thermoplastic resin, a thermohardening resin, and the like can be used. For example, polyethylene, polypropylene, polytetrafluoroethylene (PTFE), polyvinylidene fluoride (PVDF), styrenebutadiene rubber, a tetrafluoroethylene-hexafluoroethylene copolymer, a tetrafluoroethylene-hexafluoropropylene copolymer (FEP), a tetrafluoroethylene-perfluoroalkylvinylether copolymer (PFA), a vinylidene fluoride-hexafluoropropylene copolymer, a vinylidene fluoride-chlorotrifluoroethylene copolymer, an ethylene-tetrafluoroethylene copolymer (ETFE resin), polychlorotrifluoroethylene (PCTFE), a vinylidene fluoride-pentafluoropropylene copolymer, a propylene-tetrafluoroethylene copolymer, an ethylene-chlorotrifluoroethylene copolymer (ECTFE), a vinylidene fluoride-hexafluoropropylene-tetrafluoroethylene copolymer, a vinylidene fluoride-perfluoromethylvinylether-tetrafluoroethylene copolymer, an ethylene-acrylic acid copolymer, an ethylene-propylene-butadiene rubber (EPBR), styrene-butadiene rubber (SBR), carboxymethylcellulose (CMC), and the like may be used.

### (Catalyst)

As the catalyst to realize effective oxidation-reduction reaction of oxygen, MnO₂, Fe₂O₃, NiO, CuO, Pt, Co, and the like can be used.

### (Forming Air Electrode (Cathode))

The porous cathode 10 may be formed by, for example, mixing the catalyst, the conductive material, and the binder, and subsequently press-forming the resultant on the cathode current collector 62. Otherwise, the porous cathode 10 may be formed by, for example, mixing the catalyst, the conductive material, and the binder into an organic solvent such as acetone, methylethyl ketone, and N-methyl-2-pyrrolidone, dissolving or dispersing the catalyst, the conductive material, and the binder therein to prepare a slurry, coating the cathode current collector 62 with the slurry by a method such as gravure coating, blade coating, comma coating, and dip coating, subsequently sublimating the organic solvent, and pressing the resultant.

### [Separator]

The separator 30 has a function to be less likely to pass moisture vapor and to easily transmit lithium ions. The separator 30 separates the porous cathode (air electrode) 10 from the anode 20, has a function to retain the nonaqueous electrolyte 40 between the anode 20 and the porous cathode 10, and may have a function to prevent internal short circuit.

The separator 30 may be composed of, for example, a porous film made of a polyolefin resin (polyethylene, polypropylene, polyvinylidene fluoride (PVdF), or the like), a non-woven cloth made of a synthetic resin (polypropylene, polyphenylene sulfide, or the like), a glass fiber non-woven cloth, or the like. In the case where a liquid electrolyte is used as an electrolyte, the separator 30 may retain a nonaqueous liquid electrolyte in the fine pores thereof. The nonaqueous liquid electrolyte is preferably hydrophobic. Further, in the case where a polymer solid electrolyte is used as the nonaqueous electrolyte 40, a polymer solid electrolyte may be used as the separator 30, and the separator 30 is not necessarily provided.

### [Anode]

The anode 20 contains an anode active material capable of inserting and extracting lithium ions, and may contain a binder to bind the anode active material. As the binder, a binder to be used for forming the cathode may be used. As the anode active material, a material that is used for general lithium ion batteries and that inserts and extracts lithium ions may be used.

### (Anode Active Material)

As the material that inserts and extracts lithium ions, for example, metal lithium, a lithium alloy, an Si alloy, an Sn alloy, a metal oxide, a metal sulfide, a metal nitride, a lithium composite oxide, and a carbon material such as graphite and coke may be used. To improve durability to moisture or the like, a lithium alloy is preferably used.

Examples of the metal oxide include a lithium titanium-based oxide, a lithium tin-based oxide, a lithium silicon-based oxide, a lithium niobium-based oxide, a lithium tungsten-based oxide, a tin oxide, a silicon oxide, a niobium oxide, and a tungsten oxide. Examples of the oxide include iron oxide (FeO₂ or the like), tungsten oxide (WO₂), manganese oxide (MnO₂), LiWO₂, LiMoO₂, In₂O₃, ZnO, SnO₂, NiO, TiO₂, V₂O₅, and Nb₂O₅.

Examples of the metal sulfide include a nickel sulfide, a molybdenum sulfide, a lithium tin sulfide, and a lithium titanium sulfide. Examples thereof include NiS, MoS, and LiTis2.

Examples of the metal nitride include a lithium cobalt nitride, a lithium iron nitride, and a lithium manganese nitride. Examples of the nitride include LiN₃ and BC₂N.

Examples of the lithium alloy include an alloy of Al, Zn, Pb, Si, Sn, Mg, In, Ca, Sb or the like and Li, an alloy of a wood's alloy and lithium (wood's alloy: a quarternary eutectic alloy of Bi, Pb, Sn, or Cd).

Examples of the Sn alloy include an alloy containing any of Si, Ni, Cu, Fe, Co, Mn, Zn, In, Ag, Ti, Ge, Bi, Sb, and Cr.

Examples of the Si alloy include an alloy containing any of Sn, Ni, Cu, Fe, Co, Mn, Zn, In, Ag, Ti, Ge, Bi, Sb, and Cr.

To insert lithium into an anode active material not being inserted with lithium is allowed to be made as follows. For example, Sn, Si, Al, Sb, or the like is subjected to mechanical alloying together with metal lithium, and thereby an oxide is lithium-reduced and a lithium alloy is allowed to be obtained. A carbon material and metal lithium are subjected to mechanical alloying, and thereby a lithium inserting carbon material is allowed to be obtained. Further, an anode active material not being inserted with lithium as an electrode is put in an electrolytic solution, metal lithium is used as a counter electrode, and a battery cell using the foregoing anode active material and the foregoing metal lithium as both electrodes is configured. The both electrodes are short-circuited, and the anode active material may be electrochemically doped with lithium.

### [Anode Current Collector]

As a material of the anode current collector 64, for example, copper, stainless steel, nickel, and the like may be used. The shape of the anode current collector 64 is, for example, a foil-like shape, a plate-like shape, or a mesh (grid)-like shape.

### (Forming Anode)

In the case where a particulate anode active material is used, the anode 20 is allowed to be formed on the anode current collector 64 as in forming the porous cathode 10.

### [Nonaqueous Electrolyte]

As the nonaqueous electrolyte 40, a liquid electrolyte and a polymer solid electrolyte may be used. The polymer solid electrolyte may be formed by using a polymer such as PVdF, HFP, PVDF-HFP, PAN, and PEO or a copolymer thereof. To prevent anode deterioration due to oxygen and moisture taken in from the region closer to the air electrode, the nonaqueous electrolyte 40 is preferably hydrophobic.

### (Liquid Electrolyte: Using Aprotic Organic Solvent)

As the liquid electrolyte, an aprotic organic solvent containing a lithium salt may be used. Examples of the lithium salt include the following. To prevent anode deterioration due to oxygen and moisture taken in from the region closer to the air electrode, the aprotic organic solvent is preferably hydrophobic.

Examples of the lithium salt include LiBR₄ (R represents a phenyl group or an alkyl group), lithium hexafluorophosphate (LiPF₆), lithium tetrafluoroborate (LiBF₄), lithium perchlorate (LiClO₄), lithium hexafluoroarsenate (LiAsF₆), lithium aluminum hexachloride (LiAlCl₄), lithium hexafluoroantimonate (LiSbF₆), lithium tetraphenylborate (LiB(C₆H₅)₄), lithium tetrakis[3,5-bis(trifluromethyl)phenyl]borate (LiTFPB), lithium bis(trifluoromethane sulfone imide, LiTFSI) (LiN(SO₂CF₃)₂), bis(pentafluoroethanesulfonyl)imido lithium (LiN(SO₂C₂F₅)₂), (trifluoromethanesulfonyl)(pentafluoroethanesulfonyl)imido lithium (LiN(SO₂CF₃)(SO₂C₂F₅)), (trifluoromethanesulfonyl)(heptafluoropropanesulfonyl)imido lithium (LiN(SO₂CF₃)(SO₂C₃F₇)), (trifluoromethanesulfonyl)(nonafluorobutanesulfonyl)imido lithium (LiN(SO₂CF₃)(SO₂C₄F₉)), bis(trifluoromethylsulfonyl)lithiomethane (LiCH(SO₂CF₃)₂), [tris[(trifluromethyl)sulfonyl]methyl]lithium (LiC(SO₂CF₃)₃), LiC(SO₂C₂F₅)₃, LiC(SO₂C₃F₇)₃, LiC(SO₂C₄F₉)₃, LiC(SO₂CF₃)₂(SO₂C₂F₅), LiC(SO₂CF₃)₂(SO₂C₃F₇), LiC(SO₂CF₃)₂(SO₂C₄F₉), LiC(SO₂C₂F_{S})₂(SO₂C₃F₇), LiC(SO₂C₂F₅)₂(SO₂C₄F₉), LiC(SO₂CF₂OCF₃)₃, trifluoromethanesulfonic acid lithium (LiO(SO₂CF₃)), nonafluoro-1-butanesulfonic acid lithium (LiO(SO₂(CF₂)₃CF₃)), undecafluoropentane-1-sulfonic acid lithium (LiO(SO₂(CF₂)₄CF₃)), tridecafluorohexane-1-sulfonic acid lithium (LiO(SO₂(CF₂)₅CF₃)), pentadecafluoroheptane-1-sulfonic acid lithium (LiO(SO₂(CF₂)₆CF₃)), heptadecafluorooctane-1-sulfonic acid lithium (LiO(SO₂(CF₂)₇CF₃)), 2,2'-oxybis(1,1,2,2-tetrafluoroethane sulfonic acid lithium) ((LiO(SO₂(CF₂)₂))₂O), tetrafluoroethane-1,2-disulfonic acid dilithium (LiOSO₂(CF₂)₂SO₂OLi), ethane-1-sulfonic acid lithium (LiO(SO₂(CH₂CH₃)), hexane-1-sulfonic acid lithium (LiO(SO₂(CH₂)₅CH₃))), heptane-1-sulfonic acid lithium (LiO(SO₂(CH₂)₆CH₃))), benzene sulfonic acid lithium (LiO(SO₂(C₆H₅))), naphthalene-2-sulfonic acid lithium (LiO(SO₂(C₁₀H₇))), 1-naphthalene sulfonic acid lithium lithium (LiO(SO₂(C₁₀H₇), 4,4'-(lithioiminobissulfonyl)bis(1-butanesulfonic acid lithium) (LiN(SO₂(CH₂)₄(SO₂)OLi)₂), trifluoroacetic acid lithium (LiO(CO)CF₃), 1,2-perfluoroethanedisulfonylimido lithium, 1,3-perfluoropropanedisulfonylimido lithium, 1,3-perfluorobutanedisulfonylimido lithium, and 1,4-perfluorobutanedisulfonylimido lithium.

Examples of the aprotic organic solvent include cyclic carbonate, chain carbonate, cyclic ester, cyclic ether, and chain ether. Specific examples thereof include ethylene carbonate (EC), propylene carbonate (PC), butylene carbonate, vinylene carbonate (VC), dimethyl carbonate (DMC), diethyl carbonate (DEC), ethylmethyl carbonate (EMC), gammabutyrolactone (y-BL), gamma valerolactone, tetrahydrofuran (THF), 2-methyltetrahydrofuran (MTHF), tetrahydropyran (THP), dioxolane (DOXL), 1,2-dimethoxyethane (DME), 1,3-dimethoxy propane, 1,2-diethoxyethane (DEE), propionic acid methyl (MPR), ethyl propionate (EPR), ethylene sulfite (ES), cyclohexylbenzene (CHB), tert-phenyl benzene (tPB), ether acetate (EA), sulfolane (SL), dioxolane, 3-methylsulfolane (3-MeSL), diethylether, acetonitrile (AN), and acetonitrile (AN). A mixed solvent composed of solvents selected from the foregoing solvents may also be used.

Further, to improve various characteristics, for example, various materials such as an imido salt, a sulfone compound, aromatic series, and a halogen substituent product thereof may be added to the liquid electrolyte.

### (Liquid Electrolyte: Using Ionic Liquid)

As the liquid electrolyte, an ionic liquid (called an ion liquid or an ambient temperature molten salt as well) may also be used. The ionic liquid means a salt existing as a liquid at temperature in normal working environment of the air battery according to the present invention, and includes a substance that becomes a liquid in a state being mixed with an organic solvent (however, the organic solvent herein does not include the ionic liquid).

To prevent anode deterioration due to oxygen and moisture taken in from the region closer to the air electrode, a hydrophobic ionic liquid is preferably used. In the case where the hydrophobic ionic liquid is used as a nonaqueous electrolyte, oxygen and moisture are less likely to be dissolved in the nonaqueous electrolyte, the movement of the oxygen and the moisture taken in from the region closer to the air electrode to the anode thorough the nonaqueous electrolyte is allowed to be suppressed, and anode deterioration caused by oxidation reaction and hydrolysis reaction is allowed to be suppressed. Therefore, lowering of charge and discharge characteristics of the air battery resulting from anode deterioration due to oxygen and moisture is allowed to be suppressed. Further, in the case where a hydrophobic ionic liquid having a melting point equal to or smaller than several tens deg C is used as a nonaqueous electrolyte, lowering of characteristics of the air battery caused by vaporization of the nonaqueous electrolyte is allowed to be suppressed.

In the case where the ionic liquid is used by mixing it with an organic solvent, viscosity of the ionic liquid is lowered and lithium ions are easily diffused, and therefore, lithium ion conductivity is allowed to be improved. In the case where the ionic liquid is used by mixing it with an organic solvent in which a lithium salt is dissolved, viscosity of the ionic liquid is lowered and lithium ions are easily diffused, and therefore, lithium ion conductivity is allowed to be more improved.

The ionic liquid is allowed to be expressed as [Y]⁺[X]⁻ where a cation composing the ionic liquid is expressed as [Y]⁺ and an anion composing the ionic liquid is expressed as [X]⁻. The ionic liquid is composed of combination of various cations and various anions. However, ss described above, to prevent anode deterioration due to oxygen and moisture taken in from the region closer to the air electrode, the hydrophobic ionic liquid is preferably used.

Examples of the cation [Y]⁺ composing the ionic liquid include imidazolium cation, pyrrolidinium cation, piperidinium cation, and quaternary ammonium cation.

Examples of the imidazolium cation include the following.

Examples thereof include a disubstituted imidazolium cation such as 1,3-dimethyl imidazolium, 1-ethyl-3-methylimidazolium, 1-methyl-3-proplyimidazolium, 1-butyl-3-methylimidazolium, 1-mehtyl-3-pentylimidazolium, 1-hexyl-3-methylimidazolium, 1-heptyl-3-methylimidazolium, 1-methyl-3-octylimidazolium, 1-decyl-3-methylimidazolium, 1-dodecyl-3-methylimidazolium, 1-ethyl-3-proplyimidazolium, 1-butyl-3-ethylimidazolium, 1-methoxyethyl-3-methylimidazolium, and 1-cyanoethyl-3-methylimidazolium; and a trisubstituted imidazolium cation such as 3-ethyl-1,2-dimethyl-imidazolium, 1,2-dimethyl-3-propylimidazolium, 1-butyl-2,3-dimethylimidazolium, 1,2-dimethyl-3-hexylimidazolium, 1,2-dimethyl-3-octylimidazolium, 1-ethyl-3,4-dimethylimidazolium, and 1-isopropyl-2,3-dimethylimidazolium.

Examples of the pyrrolidinium cation include the following.

Examples thereof include N,N-dimethylpyrrolidinium, N-ethyl-N-methylpyrrolidinium, N-methyl-N-propylpyrrolidinium, N-butyl-N-methylpyrrolidinium, N-methyl-N-pentylpyrrolidinium, N-hexyl-N-methylpyrrolidinium, N-methyl-N-octylpyrrolidinium, N-decyl-N-methylpyrrolidinium, N-dodecyl-N-methylpyrrolidinium, N-(2-methoxyethyl)-N-methylpyrrolidinium, N-(2-ethoxyethyl)-N-methylpyrrolidinium, N-(2-propoxyethyl)-N-methylpyrrolidinium, and N-(2-isopropoxyethyl)-N-methylpyrrolidinium.

Examples of the piperidinium cation include the following.

Examples thereof include N,N-dimethylpiperidinium, N-ethyl-N-methylpiperidinium ion, N-methyl-N-propylpiperidinium, N-butyl-N-methylpiperidinium, N-methyl-N-pentylpiperidinium, N-hexyl-N-methylpiperidinium, N-methyl-N-octylpiperidinium, N-decyl-N-methylpiperidinium, N-dodecyl-N-methylpiperidinium, N-(2-methoxyethyl)-N-methylpiperidinium, N-(2-methoxyethyl)-N-ethylpiperidinium, N-(2-ethoxyethyl)-N-methylpiperidinium, N-methyl-N-(2-methoxyphenyl)piperidinium, N-methyl-N-(4-methoxyphenyl)piperidinium, N-ethyl-N-(2-methoxyphenyl)piperidinium, and N-ethyl-N-(4-methoxyphenyl)piperidinium.

Examples of the quaternary ammonium cation include the following.

Examples thereof include N,N,N,N-tetramethylammonium, N,N,N-trimethylethylammonium, N,N,N-trimethylpropylammonium, N,N,N-trimethylbutylammonium, N,N,N-trimethylpentylammonium, N,N,N-trimethylhexylammonium, N,N,N-trimethylheptylammonium, N,N,N-trimethyloctylammonium, N,N,N-trimethyldecylammonium, N,N,N-trimethyldodecylammonium, N-ethyl-N,N-dimethylpropylammonium, N-ethyl-N,N-dimethylbutylammonium, N-ethyl-N,N-dimethylhexylammonium, 2-methoxy-N,N,N-trimethylethylammonium, 2-ethoxy- N,N,N-trimethylethylammonium, 2-propoxy-N,N,N-trimethylethylammonium, N-(2-methoxyethyl)-N,N-dimethylpropylammonium, and N-(2-methoxyethyl)-N,N-dimethylbutylammonium.

Examples of the anion [X]⁻ composing the ionic liquid include F⁻, Cl⁻, I⁻, Br⁻, AlCl₄⁻, AlF₄⁻, FeCl₄⁻, BF₄⁻, PF₆⁻, AsF₆⁻, NbF₆⁻, SbF₆⁻, ClO₄⁻, (CF₃SO₂) ₂N⁻, (C₂F₅SO₂) ₂N⁻, (C₂F₅SO₂)(CF₃SO₂)N⁻, (CF₃SO₂)(C₄F₉SO₂)N⁻, (CF₃SO₂)₃C⁻, CF₃SO₃⁻, C₄F₉SO₃⁻, CF₃CO₂⁻, C₃F₇CO₂⁻, CH₃SO₃⁻, and CH₃CO₂⁻.

As the ionic liquid, specifically, for example, 1-alkyl-3-methylimidazolium salt may be used. In the case where the salt is expressed as [1-R-3-methylimidazolium]⁺[X]⁻ where an alkyl group is expressed as R, for example, R may be an ethyl group, a butyl group, a hexyl group, an octyl group, a decyl group, a dodecyl group, a tetradecyl group, a hexadecyl group, an octadecyl group or the like, and, for example, Br, Cl, PF₆, BF₄, (CF₃SO₂)₂N, CF₃SO₃, CH₃CH(OH)COO, or the like may be used as X.

Further, 1-alkyl-2,3-dimethylimidazolium salt may be used. In the case where the salt is expressed as [1-R-2,3-methylimidazolium]⁺[X]⁻ where an alkyl group is expressed as R, for example, R is an ethyl group, a butyl group, a hexyl group, or the like, and, for example, Br, Cl, BF₄, (CF₃SO₂)₂N, or the like may be used as X.

More specific examples of the ionic liquid include 1-ethyl-3-methylimidazolium tetrafluoroborate (EMIBF₄), 1-butyl-3-methylimidazolium tetrafluoroborate (BMIBF₄), 1-hexyl-3-methylimidazolium tetrafluoroborate (HMIBF₄), 1-butyl-3-methylimidazolium bis(trifluoromethylsulfonyl)imide (BMITf₂N), and 1-butyl-3-methylimidazolium hexafluorophosphate (BMIPF₆).

### (Polymer Solid Electrolyte)

As the polymer solid electrolyte, a gel electrolyte and an intrinsic polymer electrolyte may be used.

### Intrinsic Polymer Electrolyte:

The intrinsic polymer electrolyte is an electrolyte that does not contain an organic solvent and is allowed to be obtained by holding a lithium salt by a polymer matrix. For example, the intrinsic polymer electrolyte is allowed to be obtained by holding a lithium salt such as lithium sulfone imide, LiClO₄, and LiO(SO₂CF₃) by a polymer matrix with the use of a polyalkylene polymer compound such as polyethylene oxide and polypropylene oxide.

Otherwise, the intrinsic polymer electrolyte is an electrolyte that does not contain an organic solvent and is allowed to be obtained by holding an ionic liquid by a polymer matrix. For example, the intrinsic polymer electrolyte is allowed to be obtained by dissolving a polymer initiator and a cross-linker in a vinyl monomer, adding an ionic liquid thereto, and initiating polymerization reaction. The obtained electrolyte may also be dissolved in an organic solvent and formed in the shape of a sheet as a paste state.

Further, the solid electrolyte is allowed to be obtained by dispersing an electrolyte salt in a polymer compound having ion conductivity such as an ether polymer compound, an ester polymer compound, and an acrylate polymer compound.

### Gel Electrolyte:

The gel electrolyte is an electrolyte that is allowed to be obtained by holding an aprotic solvent containing a lithium salt by a polymer matrix. For example, the gel electrolyte is allowed to be obtained by holding a substance obtained by dissolving LIClO₄ in propylene carbonate-ethylene carbonate (PC-EC) by a polymer matrix such as polyacrylnitrile (PAN).

Otherwise, the gel electrolyte is an electrolyte that is allowed to be obtained by holding an ionic liquid and a lithium salt by a polymer matrix. For example, the gel electrolyte is allowed to be obtained by dissolving a polymer initiator and a cross-linker in a vinyl monomer, adding an ionic liquid and a lithium salt thereto, and initiating polymerization reaction.

Further, for example, the gel electrolyte is allowed to be obtained by dissolving a polymer such as polyethylene oxide (PEO), polyacrylonitrile (PAN), PVdF, polymethacrylic acids, polymethacrylic acid esters, polyacrylic acids, and polyacrylic acid esters in a molten salt.

### Polymer Capable of Being Used for Forming the Polymer Solid Electrolyte:

As a polymer capable of being used for forming the polymer solid electrolyte, for example, polyacrylnitrile (PAN), polyethyleneglycol (PEG), polyvinylidene fluoride (PVdF), polyvinylpyrrolidone, a copolymer of a multifunctional acrylate and an acrylate including polytetraethyleneglycoldiacrylate, polyethyleneoxidediacrylate, ethylene oxide, or the like, polyethylene oxide (PEO), polypropylene oxide (PPO), a vinylidene fluoride-hexafluoropropylene copolymer (PVdF-HEP), polymethylmethacrylate (PMMA), polyvinylchloride (PVC), and the like may be used.

The polymer solid electrolyte is allowed to be obtained as follows as well.

A lithium salt, an ionic liquid, a substance having a polymerizable (cross-linkable) functional group as an aprotic organic solvent are mixed, and a polymerization initiator is added to the resultant mixture. The polymerizable functional group is polymerized by light and/or heat, and thereby the polymer solid electrolyte is allowed to be obtained.

In the case where the lithium salt, the ionic liquid, and the aprotic organic solvent are used, if one or more thereof have a polymerizable (cross-linkable) functional group, the polymer solid electrolyte is allowed to be formed. Further, in the case where the lithium salt and the ionic liquid are used, if one or more thereof have a polymerizable (cross-linkable) functional group, the polymer solid electrolyte is allowed to be formed. Further, in the case where the lithium salt and the aprotic organic solvent are used, if one or more thereof has a polymerizable (cross-linkable) functional group, the polymer solid electrolyte is allowed to be formed.

As the polymerizable functional group, for example, a vinyl group, a 1-propenyl group, an allyl group, an allyl amide group, an acryl group, an acryloxy group, an epoxy group, a glycidyl group, a styryl group, and the like may be used.

### Lithium salt having the polymerizable functional group:

As the lithium salt having the polymerizable functional group, for example, 6-(methacryloyloxy)-1-hexane lithium sulfonate (C₁₀H₁₇LiO₅S), 3-(acryloyloxy)-1-propane lithium sulfonate (C₆H₉LiO₅S), 2-(acryloylamino)-2-methyl-1-propane lithium sulfonate (C₇H₁₂LiNO₄S), 4-vinylbenzene lithium sulfonate (C₈H₇LiO₃S), 4-vinylbenzene lithium sulfonate (C₈H₇LiO₃S), 1-(diallylcarbamoyl)-1,2,2,2,-tetrafluoroethane lithium sulfonate (C₉H₁₀F₄LiNO₄S), and the like may be used.

### Ionic liquid having the polymerizable functional group:

As the ionic liquid having the polymerizable functional group, for example, 1-allyl-3-ethylimidazolium bromide, 1-allyl-3-ethylimidazolium borate tetrafluoride, 1-allyl-3-ethylimidazoliumbis(trifluoromethanesulfonyl)imide, 1-allyl-3-buthylimidazolium bromide, 1-allyl-3-butylimidazolium borate tetrafluoride, 1-allyl-3-butylimidazoliumbis(trifluoromethanesulfonyl)imide, 1,3-diallylimidazolium bromide, 1,3-diallylimidazolium borate tetrafluoride, 1,3-diallylimidazoliumbis(trifluoromethanesulfonyl)imide, and the like may be used.

### Aprotic organic solvent having the polymerizable functional group:

As the aprotic organic solvent having the polymerizable functional group, for example, methylvinyl ketone (CH₂=CHCOCH₃), ethylvinyl ketone (CH₂=CHCOCH₂CH₃), allylmethyl ketone (vinylacetone) (CH₂=CHCH₂COCH₃), allylacetone (CH₂=CH(CH₂)₂COCH₃), methylvinyl ether (methoxyethylene) (CH₃OCH=CH₂), methylvinyl ether (CH₂=CHOCH₃), ethylvinyl ether (CH₂=CHOCH₂CH₃), allylmethyl ether (CH₂=CHCH₂COCH₃), vinyl ether (divinyl ether) (CH₂=CHOCH=CH₂), allylethyl ether (CH₂=CHCH₂COCH₂CH₃), allyl ether (diallyl ether) ((CH₂=CHCH₂)₂O), vinyl acetate (CH₂=CHOCOCH₃), allyl acetate (CH₂=CHCH₂OCOCH₃), ethoxy acetate vinyl (CH₂=CHOCOCH₂OCH₂CH₃), acetoacetic allyl (CH₂=CHCH₂OCOCH₂COCH₃), methyl acrylate (CH₂=CHCOOCH₃), ethyl acrylate (CH₂=CHCOOCH₂CH₃), vinyl acrylate (CH₂=CHCOOCH=CH₂), allyl acrylate (CH₂=CHCOOCH₂CH=CH₂), propyl acrylate (CH₂=CHCOO(CH₂)₂CH₃), butyl acrylate (CH₂=CHCOO(CH₂)₃CH₃), acrylic acid 2-methoxyethyl (CH₂=CHCOO(CH₂)₂OCH₃), acrylic acid 2-ethoxyethyl (CH₂=CHCOO(CH₂)₂OCH₂CH₃), acrylic acid 2-(methoxycarbonyl)ethyl (CH₂=CHCOO(CH₂)₂COOCH₃), acrylic acid 2-(ethoxycarbonyl)ethyl (CH₂=CHCOO(CH₂)₂COOCH₂CH₃), acrylic acid 2-cyanoethyl (CH₂=CHCOO(CH₂)₂CN), methyl methacrylate (CH₂=C(CH₃)COOCH₃), ethyl methacrylate (CH₂=C(CH₃)COOCH₂CH₃), propyl methacrylate (CH₂=C(CH₃)COO(CH₂)₂CH₃), vinyl methacrylate (CH₂=C(CH₃)COOCH=CH₂), allyl methacrylate (CH₂=C(CH₃)COOCH₂CH=CH₂), butyl methacrylate (CH₂=C(CH₃)COO(CH₂)₃CH₃), allyloxymethyl methacrylate (CH₂=C(CH₃)COOCH₂OCH₂CH=CH₂), and the like may be used.

The present invention has been described with reference to the embodiment. However, the present invention is not limited to the foregoing embodiment, and various modifications may be made based on the technical idea of the present invention.

### INDUSTRIAL APPLICABILITY

According to the present invention, a lithium air battery capable of being used for a long time with little deterioration due to influence by moisture and carbon dioxide in the air is allowed to be provided.

## Claims

1. A lithium air battery comprising:
an anode extracting a lithium ion;
an air electrode current collector being made of a porous material;
a porous cathode containing a conductive material;
a diffusion layer being arranged between the air electrode current collector and the porous cathode and being made of a conductive material; and
a nonaqueous electrolyte being arranged between the anode and the porous cathode.

2. The lithium air battery according to claim 1 comprising:
an oxygen permselective film,
wherein oxygen having transmitted through the oxygen permselective film is taken into the porous cathode through the air electrode current collector and the diffusion layer.

3. The lithium air battery according to claim 2 comprising:
a gap between the oxygen permselective film and the air electrode current collector.

4. The lithium air battery according to claim 2 comprising:
a water-repellent layer being made of a porous material,
wherein air having passed through the water-repellent layer is taken into the oxygen permselective film.

5. The lithium air battery according to claim 4 comprising:
a gap between the water-repellent layer and the oxygen permselective film.

6. The lithium air battery according to claim 2 comprising:
a water-repellent layer being made of a porous material between the oxygen permselective film and the air electrode current collector.

7. The lithium air battery according to claim 6 comprising:
a gap between the water-repellent layer and the oxygen permselective film or between the water-repellent layer and the air electrode current collector, or gaps between the water-repellent layer and the oxygen permselective film and between the water-repellent layer and the air electrode current collector.

8. The lithium air battery according to claim 2 comprising:
a first water-repellent layer being made of a porous material; and
a second water-repellent layer being made of a porous material between the oxygen permselective film and the air electrode current collector,
wherein air having passed through the first water-repellent layer is taken into the oxygen permselective film.

9. The lithium air battery according to claim 8 comprising:
a gap between the first water-repellent layer and the oxygen permselective film; and
a gap between the second water-repellent layer and the oxygen permselective film or between the second water-repellent layer and the air electrode current collector, or gaps between the second water-repellent layer and the oxygen permselective film and between the second water-repellent layer and the air electrode current collector.

10. The lithium air battery according to claim 1 comprising:
a separator between the porous cathode and the nonaqueous electrolyte.
